# EUROPEAN PATENT APPLICATION

(11) **EP 4 733 874 A2**
(43) Date of publication of application: **29.04.2026**
(21) Application number: 25202568.9
(22) Date of filing: 16.09.2025
(51) Int. Cl.: G05B 23/02

(54) **SYSTEM AND METHODS FOR HEALTH ASSESSMENT AND PREDICTIVE MAINTENANCE OF MACHINES WITH MOTION AXES**

(30) Priority: 22.10.2024 US 202418923267
(71) Applicant: Schneider Electric Systems USA, Inc., Foxborough, MA 02035 (US)
(72) Inventor: Girault, Michel Maurice, Ventenac Cabardes (FR); Geroulas, Vasileios, Northville, MI (US); Van Hemelryck, Glenn Jean Elie, Bron (FR); Arce, Victor, Grenoble (FR); Baziret, Yannick Andre, Saint-Mars-Du-Desert (FR)
(74) Representative: Manitz Finsterwald Patent- und Rechtsanwaltspartnerschaft mbB

(57) **Abstract**

Machines with motion axes are monitored without relying on additional sensors. First control data is collected and analyzed to determine a signature. Second control data is collected and compared with the signature to identify a difference between the second control data and the signature. On condition that the difference exceeds a predetermined threshold, one or more actions are performed to address the difference between the second control data and the signature.

## Description

### BACKGROUND

Industrial systems require regular maintenance to ensure safe, reliable operation over time. Some known maintenance strategies, such as planned or scheduled maintenance, involve performing actions based on predetermined schedules rather than actual equipment condition. However, these strategies often lead to unnecessary downtime and expenses due to premature maintenance or servicing. To mitigate these issues, at least some industrial systems employ fault detection solutions to monitor the equipment and schedule maintenance only when potential faults or anomalies are detected. However, conventional fault detection solutions typically require installation of additional sensors to monitor the equipment, which can be cost-prohibitive and/or impractical, especially for large and/or complex systems where numerous sensors are required.

### SUMMARY

The present disclosure allows for equipment monitoring without relying on additional sensors. In one aspect, a method is provided for assessing a condition of a machine with one or more motion axes. The method includes collecting first control data, analyzing the first control data to determine a signature, collecting second control data, comparing the second control data with the signature to identify a difference between the second control data and the signature, and on condition that the difference exceeds a predetermined threshold, performing one or more actions to address the difference between the second control data and the signature.

In another aspect, a system is provided for conducting one or more health assessments. The system includes a machine with one or more motion axes, and a computing device configured to collect first control data, analyze the first control data to determine a signature, collect second control data, compare the second control data with the signature to identify a difference between the second control data and the signature, and on condition that the difference exceeds a predetermined threshold, perform one or more actions to address the difference between the second control data and the signature.

In yet another aspect, a computing device is provided for assessing a condition of a machine with one or more motion axes. The computing device includes a processor, and a computer-readable memory comprising one or more instructions for causing the processor to collect first control data, analyze the first control data to determine a signature, collect second control data, compare the second control data with the signature to identify a difference between the second control data and the signature, and on condition that the difference exceeds a predetermined threshold, perform one or more actions to address the difference between the second control data and the signature.

Other aspects and features of the present disclosure will be in part apparent and in part pointed out herein. This Summary is provided to introduce a selection of concepts in a simplified form that are further described below in the Detailed Description. This Summary is not intended to identify key features or essential features of the claimed subject matter, nor is it intended to be used in isolation as an aid in determining the scope of the claimed subject matter.

### BRIEF DESCRIPTION OF THE DRAWINGS

Aspects of the present disclosure are described in detail below with reference to the attached drawing figures, wherein:
FIG. 1 is a block diagram illustrating an example system including machines with motion axes;
FIGS. 2-9 include line graphs illustrating example motion control data that may be used to control and/or manage a machine with motion axes;
FIG. 10 includes a screenshot of an example system dashboard offering an overview of a system, such as the system shown in FIG. 1;
FIG.11 includes a screenshot of an example axis interface offering an overview of an axis or machine within a system, such as the system shown in FIG. 1;
FIG. 12 includes a screenshot of an example trace interface featuring a trace of an axis or machine within a system, such as the system shown in FIG. 1;
FIGS. 13 and 14 include line graphs illustrating example traces that may be shown via a user interface, such as the trace interface shown in FIG. 12;
FIG. 15 includes a screenshot of an example notification interface featuring timeline of events within a system, such as the system shown in FIG. 1;
FIG. 16 is a flowchart illustrating an example method for assessing a condition of a machine with one or more motion axes; and
FIG. 17 is a computer architecture diagram illustrating an computing system that may be used to perform one or more computing operations described herein, such as those included in the method shown in FIG. 16.

Corresponding reference numbers indicate corresponding parts throughout the drawings.

### DETAILED DESCRIPTION

According to various examples of the present disclosure, equipment monitoring is used to conduct health assessments and predict maintenance or replacement of machines with motion axes without relying on additional sensors. Machines with motion axes, such as motors, actuators, linear stages, and rotary tables, include one or more components that move along linear axes or about rotational axes. Such machines generally rely on precise motion control data to perform tasks through controlled movement. Machines with motion axes are often found in industries such as manufacturing, robotics, CNC machining, and automation, where precise positioning and movement capabilities are essential for performing tasks and operations. However, underlying physical or electrical issues in such machines, such as deterioration, misalignment, and/or overloads, can lead to equipment damage or failure, potentially resulting in mechanical disruption, machine stoppages, production bottlenecks, lost production, and/or decreased manufacturing quality.

Examples described herein enable the prediction of potential damage or failure before it occurs, facilitating proactive maintenance. To achieve this, examples described herein may utilize a machine with motor axes itself or a drive controlling the machine "as a sensor" to detect and/or measure one or more parameters without relying on additional sensors. For example, an increase in current or energy to control the machine may be indicative of a friction-related anomaly, while a high variance in current or energy to control the machine may be indicative of a backlash-related anomaly. By leveraging existing data sources and employing advanced analytical techniques, examples described herein allow for proactive maintenance strategies that minimize downtime and reduce operational costs. Additionally, eliminating the need for additional sensors decreases overall system cost and complexity by reducing the number of components that require installation and maintenance, while also increasing overall system reliability by reducing the number of potential points of failure.

Aspects of the disclosure allow for the identification of faults and/or anomalies, such as those related to friction or backlash, using existing data sources by learning or registering patterns in reference signals or control data to calculate or determine a health index for each axis in machines with motor axes. In some examples, reference signals and/or control data may be periodically or continuously sampled on one machine cycle and transmitted to an edge device for processing. For example, the edge device may be used to perform temporal and frequency analysis of the reference signals and/or control data, and/or to compute or determine a health index for each axis in the time and frequency domains. The health indices may be monitored over time to assess the current health or condition of each axis and/or machine, and/or to gain analytical insights, such as performance metrics, efficiency data, operational trends, and/or fault detection. This information can then be uploaded to the cloud to allow one or more remote users to access it through a web-based interface.

In some examples, the edge device learns normal, healthy operational behavior across all axes and various loads or conditions. This allows the edge device to identify changes or deviations from expected operational behavior which may indicate or reveal one or more faults and/or anomalies in near-real-time. Such early detection supports proactive maintenance strategies that mitigate the risk of unexpected system failures. For example, control data collected during a first time period (e.g., first control data) may be used to establish a baseline which may be compared with control data collected during a second time period (e.g., second control data) to identify one or more differences or deviations from the baseline which may be indicative of one or more faults and/or anomalies. On condition that a deviation satisfies or crosses a predetermined threshold, an alert or notification may be presented to one or more users, such as a maintenance or quality team, prompting predictive maintenance actions. The system allows for customizable alarm management, including the ability to set different thresholds and action types. In this manner, examples described herein facilitate detecting drifts from healthy operational behavior and addresses common industry challenges related to wear, damage, imbalance, misalignment, gaps, slack, backlash, friction, impact, improper belt tension, fluid noise, insufficient lubrication, cavitation, power quality issues, or circuit issues in motion-controlled machines.

Aspects of the present disclosure provide for a computing system that performs one or more operations in an environment including a plurality of devices coupled to each other via a network (e.g., a local area network (LAN), a wide area network (WAN), the internet). The systems and methods described herein may be implemented using computer programming or engineering techniques including computer software, firmware, hardware, or a combination or subset thereof. Unless defined otherwise, all technical and scientific terms used herein have the same meaning as commonly understood by one of ordinary skill in the art to which the present disclosure belongs. Although any methods and materials similar to or equivalent to those described herein can be used in the practice or testing of the present disclosure, some preferred methods and materials are described below.

The systems and methods disclosed herein provide a technological solution to technical problems by leveraging existing motion control data to gain valuable insights into the health of the machine and/or the overall system. The technical effect of the systems and methods described herein is achieved by using a computing system configured to perform one or more of the following operations: (i) collecting first control data; (ii) analyzing the first control data to determine a signature; (iii) collecting second control data; (iv) comparing the second control data with the signature to identify a difference between the second control data and the signature; (v) analyzing one or more time domain parameters in the second control data to determine whether the second control data is indicative of one or more friction-related anomalies; (vi) analyzing one or more frequency domain parameters in the second control data to determine whether the second control data is indicative of one or more backlash-related anomalies; and/or (vii) performing one or more actions to address the difference between the second control data and the signature.

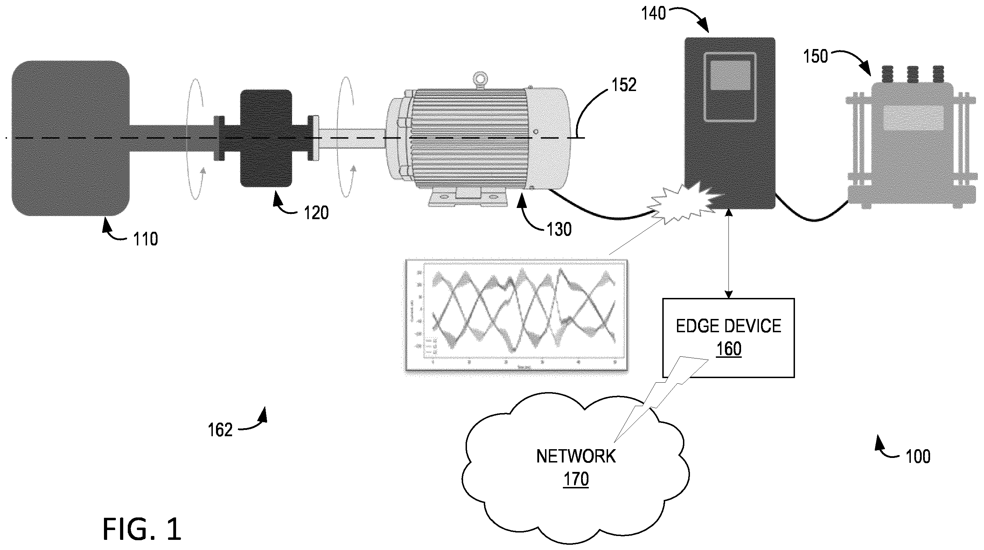

FIG. 1 shows an example system 100 including machines with motion axes. In some examples, the system 100 is configured to drive a load 110 through a gearbox 120 using a motor 130 controlled by a drive 140 powered by a power supply 150.

The load 110 is a mechanical apparatus or device configured to perform one or more tasks or operations. The load 110, and its task, may vary depending on application. Example loads 110 may include, without limitation, conveyor systems, pumps, compressors, mixers, agitators, fans, blowers, machine tools, material handling equipment, packaging machines, presses, and robotic systems. In some examples, the load 110 itself may be a machine with motion axes configured to perform its task through controlled movement. For example, the load 110 may be or include a CNC machine tool which uses its motion axes for precise cutting and shaping of materials and/or an automated packaging system which uses its motion axes to place products into boxes with precision and consistency.

The gearbox 120 is a mechanical apparatus or device configured to provide or deliver mechanical power to the load 110, enabling it to perform its task. For example, the gearbox 120 may provide rotational energy to the spindle of a CNC machine tool to control cutting tools with high precision and/or to the arms and conveyor belts of an automated packaging system to ensure accurate and efficient handling of products. In some examples, the gearbox 120 is used to regulate and/or manage an amount of rotational speed and/or torque transmitted to the load 110 to meet operational demands. For example, the gearbox 120 may include a plurality of gears that mesh together to transfer rotational power based on their gear ratios, enabling it to adjust the amount of rotational speed and/or torque applied to drive the load 110.

The motor 130 is an electromechanical apparatus or device configured to convert electrical energy from the drive 140 and/or power supply 150 into mechanical power, which it provides or delivers to the gearbox 120 to drive the load 110. For example, the motor 130 may include a rotor that spins or rotates about a spinning axis 152 to generate the mechanical power when energized by the power supply 150. In some examples, operation and/or performance of the motor 130 may be controlled using the drive 140.

The drive 140 is an electrical apparatus or device configured to provide or supply electrical signals to the motor 130 to regulate and/or manage operation and/or performance of the motor 130. For example, the drive 140 may adjust control parameters such as frequency, voltage, and/or current of the electrical input to the motor 130 to regulate and/or manage one or more operating parameters, such as position, speed, acceleration, force, and/or torque of the motor 130. In some examples, these adjustments are made based on one or more physical properties and/or environmental conditions, as detected or determined by one or more feedback mechanisms or predetermined parameters. In this manner, the drive 140 allows for precise motion control capabilities, enabling dynamic adjustments that enhance performance and/or efficiency of the motor 130 and overall system 100.

As shown in FIG. 1, the system 100 may include one or more edge devices 160 configured to perform one or more computing tasks such as data aggregation, filtering, analysis, and/or running machine learning models. These computing tasks support monitoring the operation and/or performance of the system 100 and its components, including the load 110, gearbox 120, motor 130, drive 140, and power supply 150. In some examples, an edge device 160 may be configured to utilize a component of the system 100 (e.g., load 110, gearbox 120, motor 130, drive 140, power supply 150, etc.) "as a sensor" to detect and/or measure one or more operational and/or load conditions without relying on additional sensors. For example, the edge device 160 may communicate with the load 110, gearbox 120, motor 130, drive 140, and/or power supply 150 to collect and/or analyze various types of existing data including, without limitation, operational state, start time, stop time, running time, power input, power output, power consumption, power loss, power quality, position, speed, acceleration, force, torque, frequency, voltage, current, operating temperature, and/or diagnostic codes. In this manner, the state of the elements after the motor (e.g., change on the kinematics) may be deduced.

In some examples, the edge device 160 obtains and/or receives motion control data 162 associated with one or more machines with motion axes, such as the load 110 and/or motor 130, and analyzes the motion control data 162 to assess health or performance, detect anomalies, and/or predict maintenance needs. For example, the motion control data 162 may be used to identify or determine an efficiency, performance, and/or condition of the system 100 and/or one or more of its components (e.g., load 110, gearbox 120, motor 130, drive 140, power supply 150, etc.). Example motion control data 162 may include, without limitation, position, speed, acceleration, force, torque, frequency, voltage, and current. This data allows a state of health of the kinematic chain associated with the motor 130 to be deduced.

To reduce latency and/or ensure real-time or near-real-time processing, the edge device 160 may be proximate to the monitored component of the system 100. In some examples, the edge device 160 may be communicatively coupled to one or more remote computing devices (not shown) via a network 170 to facilitate remote monitoring and/or management of the system 100. In this manner, the network 170 may allow for one or more adjustments, diagnostics, and/or maintenance to be performed using a remote computing device.

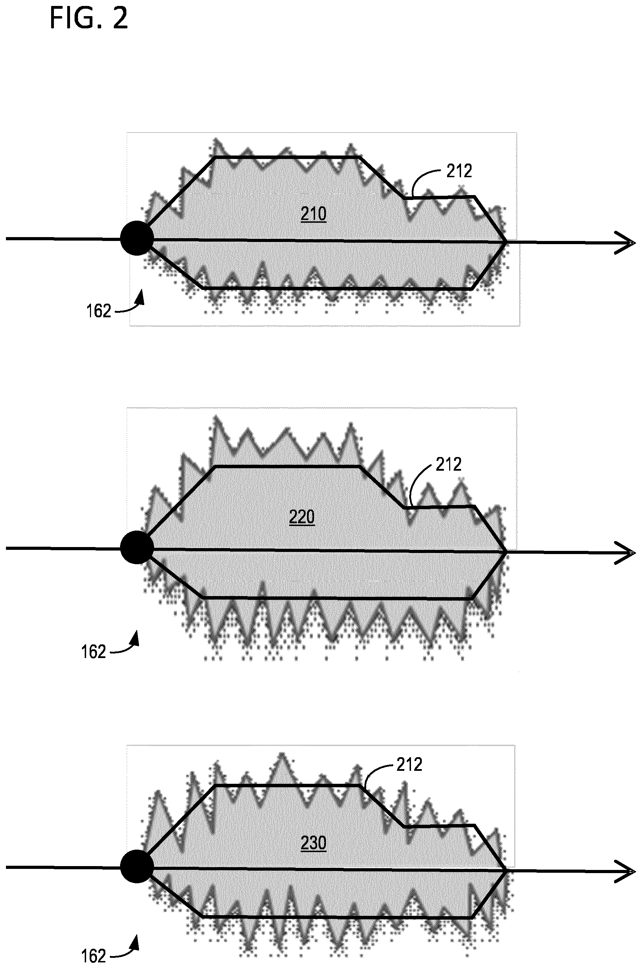

FIG. 2 shows sets of example motion control data 162 used to control and/or manage a machine with motion axes, such as the load 110 and/or motor 130. The three sets illustrate how various issues may be detected or identified by analyzing changes in the motion control data 162 over time. For example, a first set of motion control data 162, collected during a first time period, shows a first current pattern 210 that corresponds to normal engine torque under typical operating conditions. This first current pattern 210 may be used to establish or define a standard or signature 212 for baseline operational behavior.

The second set of motion control data 162, collected during a time period following the first time period, shows a second current pattern 220, The second current pattern 220 may be compared with the signature 212 to determine whether there are any changes or deviations from the baseline operational behavior. As shown in FIG. 2, the second current pattern 220 extends generally beyond the signature 212, indicating a higher current draw compared to the first current pattern 210. This increased current draw associated with the second current pattern 220 exemplifies the effects of increased friction within the system 100, as more current is needed to overcome the frictional forces.

The third set of motion control data 162, also collected during a time period following the first time period, shows a third current pattern 230. The third current pattern 230 may be compared with the signature 212 to determine whether there are any changes or deviations from the baseline operational behavior. As shown in FIG. 2, the third current pattern 230 is generally more erratic than the signature 212, indicating an irregular current draw compared to the first current pattern 210. This irregular current draw associated with the third current pattern 230 exemplifies the effects of backlash or mechanical slack within the system 100, as additional adjustments are needed to address mechanical play or misalignment.

Motion control data 162 associated with a first time period (e.g., first current pattern 210) may be referred to a first control data, and motion control data 162 associated with a time period following the first time period (e.g., second current pattern 220, third current pattern 230) may be referred to as second control data. In some examples, differences or deviations between the first control data and the second control data may be associated with one or more identified factors, including without limitation changes in task, operational state, system configuration, load condition, and/or environmental condition. Additionally or alternatively, at least some differences or deviations between the first control data and the second control data may be associated with one or more previously unidentified factors, including without limitation wear, damage, imbalance, misalignment, gaps, slack, backlash, friction, impact, improper belt tension, fluid noise, insufficient lubrication, cavitation, power quality issues, or circuit issues.

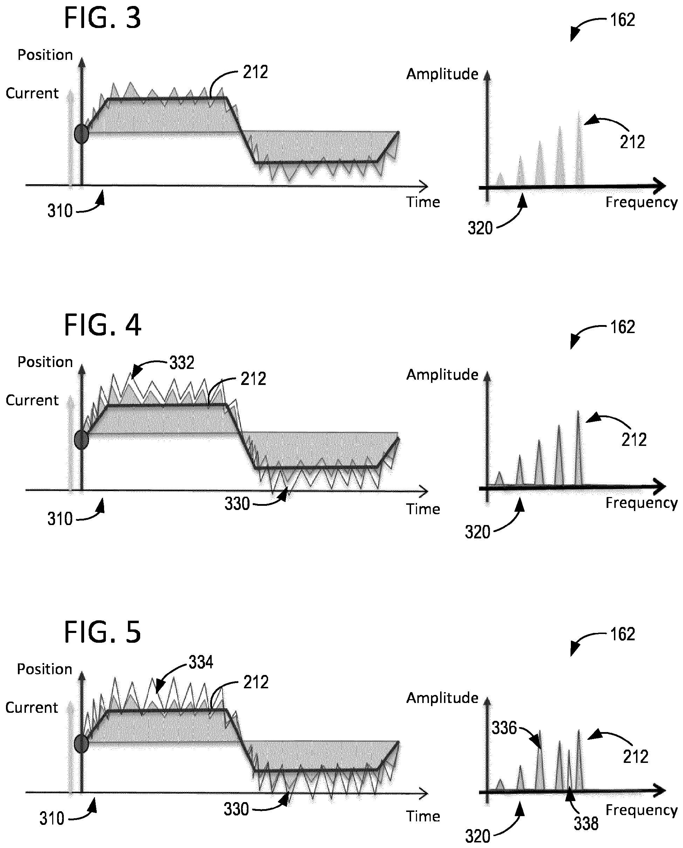

FIGS. 3-5 show other sets of example motion control data 162 used to control and/or manage a position of a machine with motion axes, such as the load 110 and/or motor 130. As shown in FIGS. 3-5, the motion control data 162 may be shown in two line graphs: a first line graph 310 which enables temporal analysis by plotting one aspect of the motion control data 162, such as current, over time and a second line graph 320 which enables spectral analysis by plotting another aspect of the motion control data 162, such as amplitude, against yet another aspect of the motion control data 162, such as frequency. Alternatively, the motion control data 162 may be represented in any other format or manner that enables the methods and systems described herein to function and/or operate as described herein.

FIG. 3 shows a first set of example motion control data 162 from a first time period (e.g., first control data). The first line graph 310 shows how a periodic current generally follows a sine wave pattern over time and how it produces a corresponding position that mirrors the same sine wave pattern. The first line graph 310 shown in FIG. 3 may be analyzed to establish or define a standard or signature 212 for baseline operational behavior in the time domain. For example, the first line graph 310 may be analyzed to identify statistical measures such as the mean, variance, standard deviation, peak values, trough values, peak-to-peak (or trough-to-trough) values, and root mean square (RMS) values. Monitoring the motion control data 162 in the time domain may reveal or indicate transient events and/or time-varying characteristics, such as mechanical or physical variations.

The second line graph 320 represents the motion control data 162 in the frequency domain, showing how amplitude varies with frequency. The second line graph 320 reveals a monotonically increasing trend in amplitude with frequency, suggesting that higher frequencies are associated with larger amplitudes. The second line graph 320 also presents a multimodal distribution of amplitude along the frequency axis, marked by distinct peaks or spikes at specific frequencies where significant responses or energy levels are observed. The second line graph 320 shown in FIG. 3 may be used to establish a standard or signature 212 for baseline operational behavior in the frequency domain. For example, the second line graph 320 may be analyzed to identify natural resonant frequencies, harmonics, and/or other spectral features. Monitoring the motion control data 162 in the frequency domain may reveal frequency-related phenomena, such as resonance, harmonic content, mechanical backlash, gear mesh irregularities, and/or frequency-specific responses.

FIG. 4 shows a second set of example motion control data 162 from a time period following the first time period (e.g., second control data). As shown in FIG. 4, the second control data may be overlaid or compared with the first control data from FIG. 3 to identify or determine one or more differences or deltas 330 which may be indicative of one or more faults and/or anomalies. For example, FIG. 4 shows a first delta 332 in the current within the time domain, while the amplitude in the frequency domain remains unchanged or relatively similar. The deltas 330 shown in FIG. 4 (e.g., first delta 332) may be indicative of a friction-related anomaly impacting current control, which typically manifests as increased resistance or heat due to frictional forces affecting the system 100.

FIG. 5 shows a third set of example motion control data 162 from a time period following the first time period (e.g., second control data). Like FIG. 4, FIG. 5 also shows the second control data overlaid or compared with the first control data from FIG. 3. FIG. 5 shows a second delta 334 in the current within the time domain, a third delta 336 in the amplitude within the frequency domain, and a fourth delta 338 in the presence of new peaks or spikes of amplitude at different frequencies. The deltas 330 shown in FIG. 5 (e.g., second delta 334, third delta 336, fourth delta 338) may be indicative of a backlash-related anomaly impacting current control, which typically arises from mechanical play or misalignment leading to irregularities in gear engagement and/or position control.

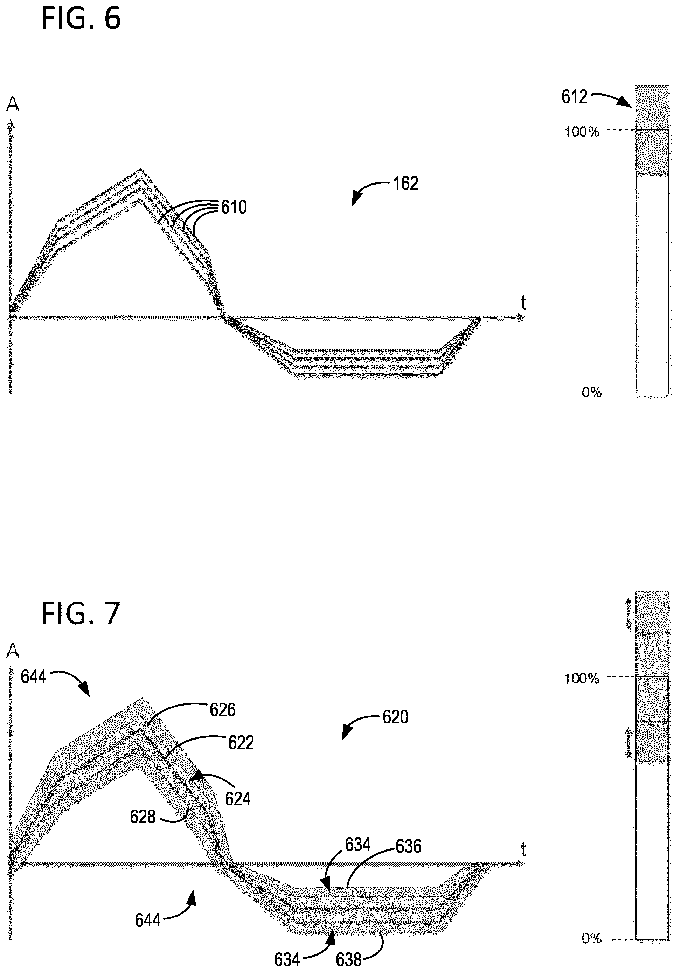

FIGS. 6-9 show sets of example motion control data 162 used to control and/or manage a machine with motion axes, such as the load 110 and/or motor 130. FIG. 6 shows motion control data 162 collected during a first time period (e.g., first control data). The first control data shown in FIG. 6 includes a line graph that shows how amplitude varies over time. Alternatively, the first control data may be represented in any other format or manner that enables the methods and systems described herein to function and/or operate as described herein. As shown in FIG. 6, the first control data may be plotted as a plurality of overlapping traces 610 to facilitate identifying or determining one or more patterns. For example, each trace 610 shown in FIG. 6 represents a single cycle of amplitude, and the overlapping of the traces 610 provides a comprehensive view of amplitude variations over the first time period. The traces 610 may be used to establish or define one or more ranges or zones of operational behavior. For example, FIG. 6 shows a range 612 of amplitude covered by the traces 610 which is indicated on a scale positioned alongside the line graph.

FIG. 7 shows an example classification system 620 that may be derived or generated from the motion control data 162 and/or traces 610 shown in FIG. 6. The classification system 620 facilitates quantitative analysis of deviations from expected operational behavior, allowing for early detection of potential issues and supporting proactive maintenance strategies to reduce the risk of unexpected system failures. As shown in FIG. 7, the classification system 620 may depict or represent a standard or signature 212 for baseline operational behavior as a first plot line 622. Additionally or alternatively, the classification system 620 may depict or represent one or more other plot lines that delineate or define one or more boundaries and/or zones of operational behavior. For example, FIG. 7 shows a healthy zone 624 defined between an upper plot line 626 and a lower plot line 628 which is aligned with or corresponds to the range 612 shown in FIG.6. Alternatively, the healthy zone 624 may be defined to cover any range that enables the methods and systems described herein to function and/or operate as described herein.

In some examples, the classification system 620 may include one or more warning zones 634 to provide a buffer for deviations from the healthy zone 624. For example, FIG. 7 shows an upper warning zone 634 positioned above the healthy zone 624 and a lower warning zone 634 positioned below the healthy zone 624. As shown in FIG. 7, the upper warning zone 634 may be defined between an upper plot line 636 and the upper plot line 626 of the healthy zone 624, and the lower warning zone 634 may be defined between a lower plot line 638 and the lower plot line 628 of the healthy zone 624. Alternatively, the warning zones 634 may be defined to cover any range that enables the methods and systems described herein to function and/or operate as described herein.

In some examples, the classification system 620 may include one or more alert zones 644 to signal or identify significant deviations from the healthy zone 624 which may be symptomatic of one or more faults and/or anomalies in the system 100. For example, FIG. 7 shows an upper alert zone 644 positioned above the healthy zone 624 and a lower alert zone 644 positioned below the healthy zone 624. As shown in FIG. 7, the upper alert zone 644 may be defined beyond (i.e., above) the upper plot line 636 of the upper warning zone 634, and the lower alert zone 644 may be defined beyond (i.e., below) the lower plot line 638 of the lower warning zone 634. Alternatively, the alert zones 644 may be defined to cover any range that enables the methods and systems described herein to function and/or operate as described herein.

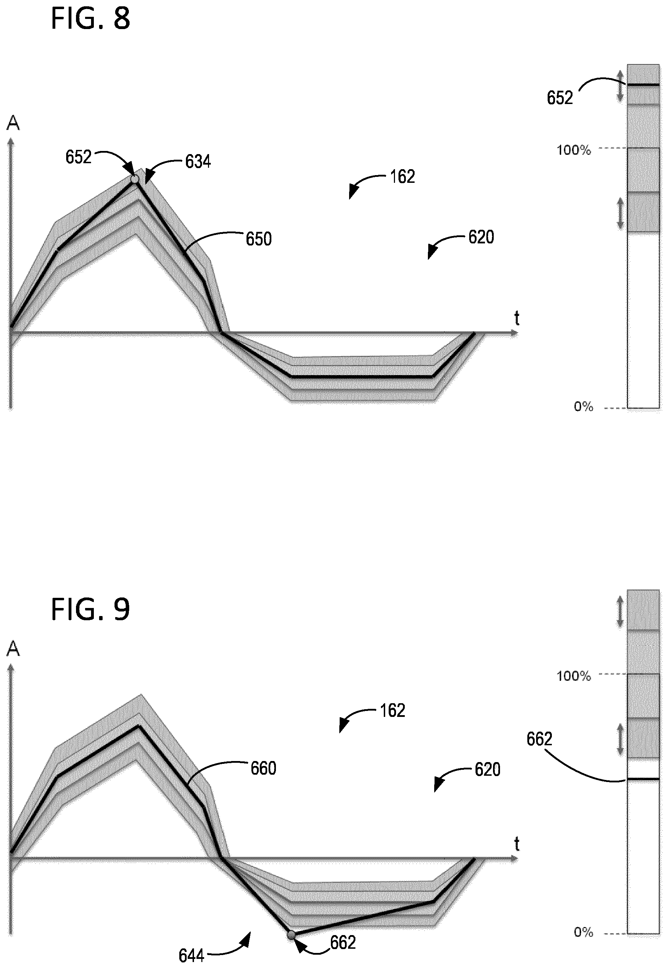

FIG. 8 shows example motion control data 162 collected during a time period following the first time period (e.g., second control data). As shown in FIG. 8, the second control data may be plotted as a trace 650 which is overlaid or compared with the classification system 620 from FIG. 7 to facilitate determining whether the second control data reveals or indicates one or more faults and/or anomalies. For example, FIG. 8 shows or highlights a segment or portion 652 of the trace 650 that extends into the warning zone 634, indicating a deviation from expected operational behavior.

FIG. 9 shows other example motion control data 162 collected during a time period following the first time period (e.g., second control data). Like FIG. 8, FIG. 9 also plots the second control data as a trace 660 which is overlaid or compared with the classification system 620 from FIG. 7. FIG. 9 shows or highlights a segment or portion 662 of the trace 660 that extends into the alert zone 644, indicating a significant deviation from expected operational behavior.

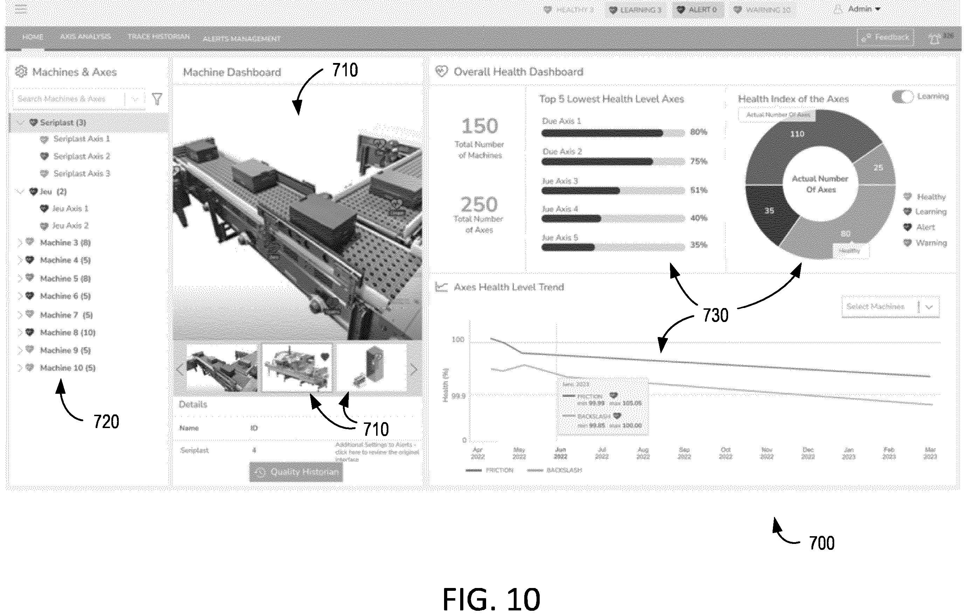

FIG. 10 shows an example system dashboard 700 offering an overview of the system 100. The system dashboard 700 includes one or more diagrams or pictures 710 of the system 100, a tree 720 allowing a user to drill down within the system 100 by machine and/or axis, and one or more tables, charts, and/or graphs 730 showing health-related metrics (e.g., motion control data 162) associated with the system 100 and/or one or more of its components. The graphs 730 enable the user to monitor the health of the system 100 and make informed decisions based on data.

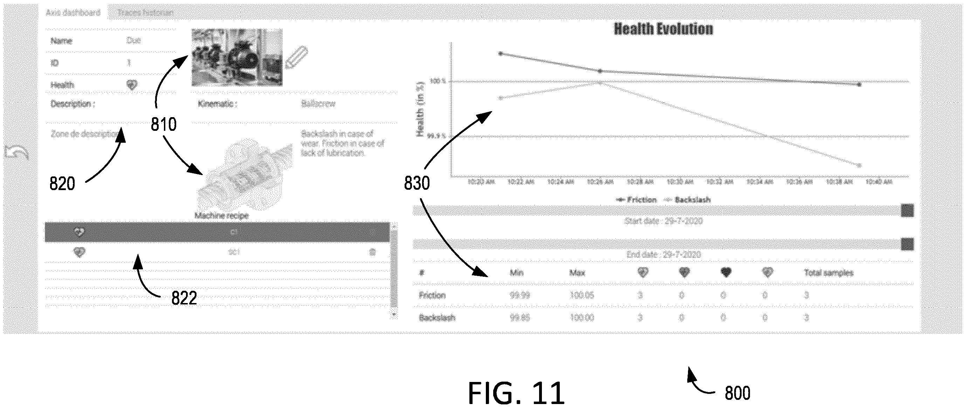

FIG. 11 shows an example axis interface 800 offering an overview of a particular axis (e.g., spinning axis 152) within the system 100. The axis interface 800 includes one or more diagrams or pictures 810 of the axis, a window 820 with technical specifications and/or operational parameters associated with the axis, a recipe list 822 with predefined operational settings or configurations associated with the axis, and one or more tables, charts, and/or graphs 830 showing health-related metrics (e.g., motion control data 162) associated with the axis. The recipe list 822 enables one or more sets of predefined operational settings or configurations (e.g., desired motor speeds, acceleration or deceleration rates, torque limits, alert settings). The graphs 830 enable the user to monitor the health of the axis and make informed decisions based on data. In some examples, the axis interface 800 provides a capability to drill down into detailed information about the axis, including selecting a particular parameter and/or time period for the data displayed on the graphs 830.

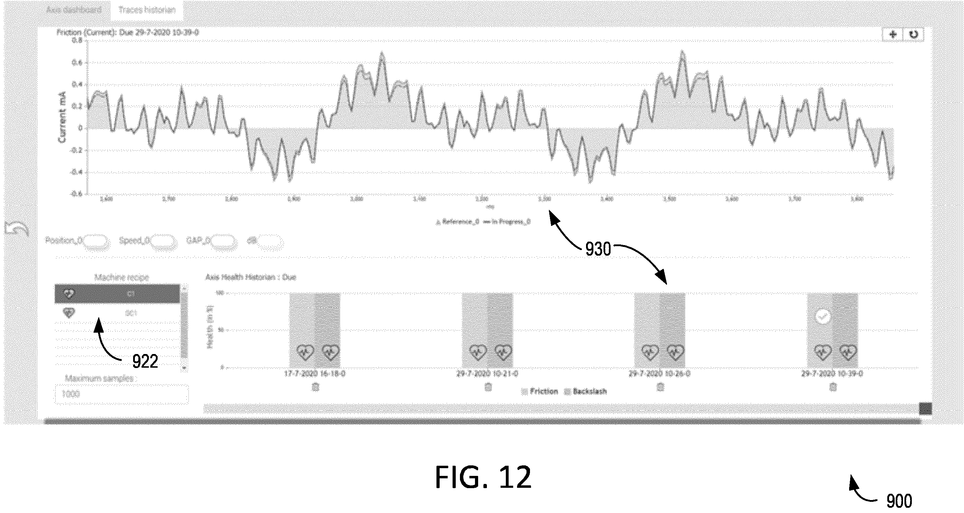

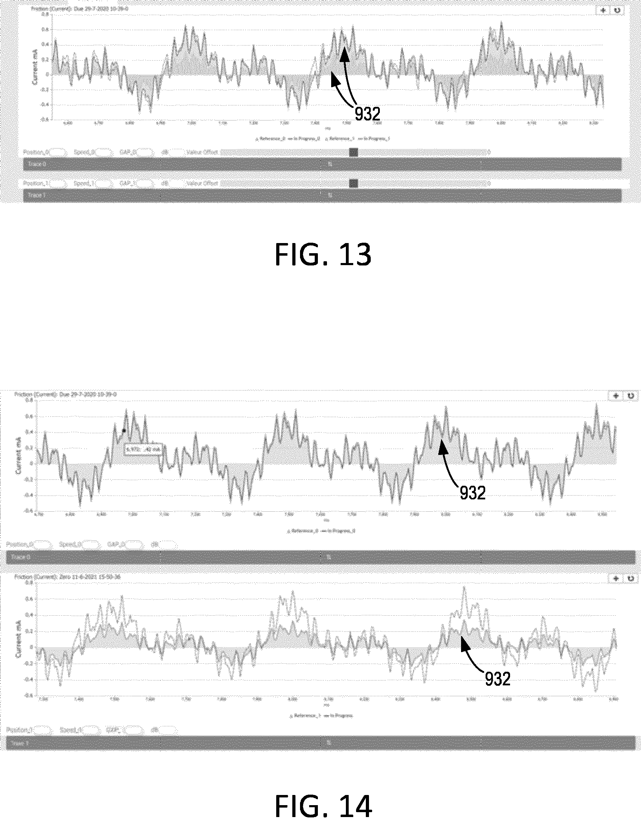

FIG. 12 shows an example trace interface 900 featuring a particular trace (e.g., trace 610, trace 650, trace 660) of an axis (e.g., spinning axis 152). The trace interface 900 includes a recipe list 922 with operational recipes or configurations associated with the axis and one or more tables, charts, and/or graphs 930 showing health-related metrics (e.g., motion control data 162) associated with the axis. The graphs 930 enable the user to monitor the health of the axis and make informed decisions based on data. In some examples, the trace interface 900 provides a capability to drill down into detailed information about the axis, including selecting a particular parameter and/or time period for the data displayed on the graphs 930. Additionally, the trace interface 900 may provide a capability to select another axis for comparison. For example, FIG. 13 shows two overlaid line graphs 932 enabling the user to make a direct comparison of two separate traces across different axes and/or conditions. For another example, FIG. 14 shows two separate line graphs 932 enabling the user to understand and analyze each trace without interference from the other.

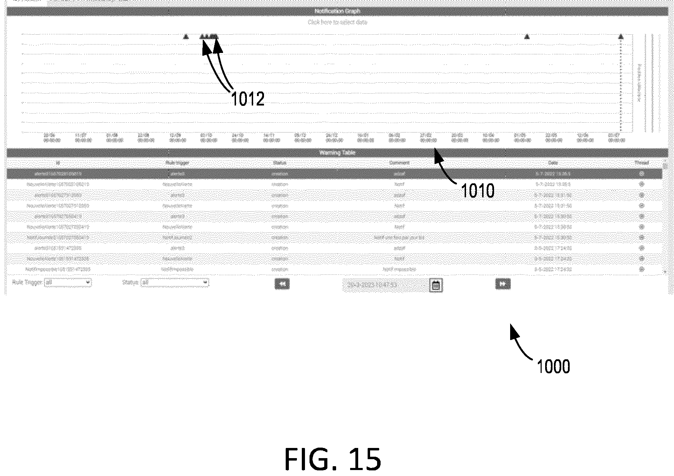

FIG. 15 shows an example notification interface 1000 featuring a timeline 1010 including a plurality of events 1012 within the system 100. The timeline 1010 may include one or more indicia representing one or more events 1012, such as notifications and/or alerts, in chronological order. Alternatively, the events 1012 may be represented in any other format or manner that enables the methods and systems described herein to function and/or operate as described herein.

In some examples, the notification interface 1000 provides a capability to change or configure one or more rules and/or parameters for customizing one or more preferences, triggers, and/or actions, allowing for tailored notification management based on desired needs and/or operational requirements. For example, the notification interface 1000 may be used to define or modify one or more thresholds (e.g., upper plot line 626, lower plot line 628, upper plot line 636, lower plot line 638) and/or one or more actions that are triggered when a threshold is satisfied or crossed. Example actions may include, without limitation, generating a notification, alert, warning, suggestion, recommendation, prompt, confirmation, status bar, and/or control data, and/or using control data to control or manage a machine with motion axes. In some examples, the notification interface 1000 may be used to define or modify which aspects, parameters, axes, and/or machines are monitored. Additionally or alternatively, the notification interface 1000 may be used to define or modify timing, priority, urgency, and/or escalation procedures (e.g., if an event 1012 is not acknowledged or resolved within a predetermined timeframe).

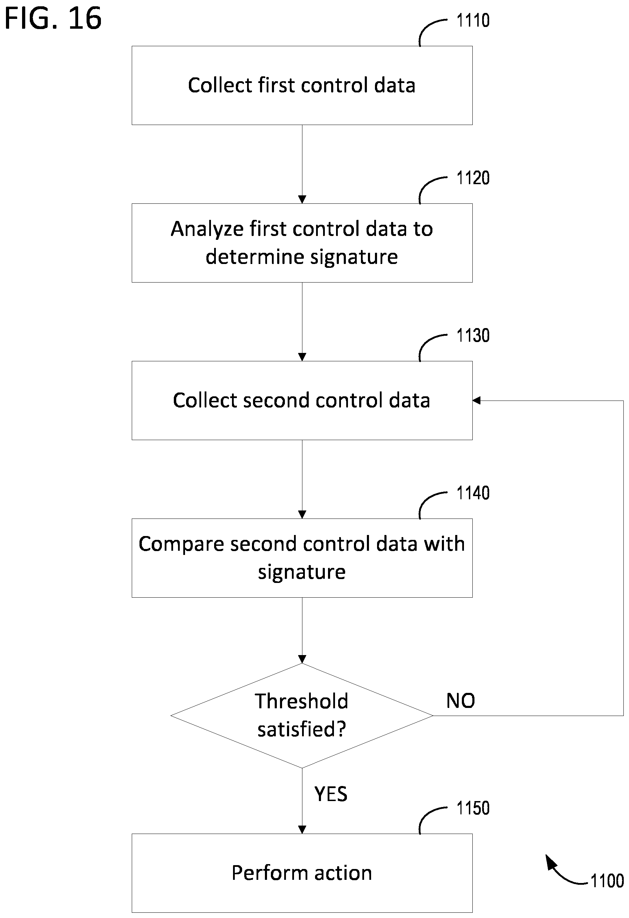

FIG. 16 shows a method 1100 for assessing a health condition of a machine with one or more motion axes, such as the load 110 and/or motor 130. The method 1100 may be performed on all or part of the motion axes. The method 1100 includes collecting first control data associated with one or more axes of the machine at operation 1110. For example, the edge device 160 may communicate with a controller to collect frequency, voltage, and/or current data (e.g., motion control data 162) used to regulate or control the spinning axis 152 of the motor 130 (e.g., first axis) over an initial learning period (e.g., first time period). The controller's role is to control the machine. This is where we may find one or more automation programs, I/O management, motion control, etc.

The first control data is analyzed at operation 1120 to determine a signature 212 for each axis of the machine. For example, the edge device 160 may analyze one or more time domain parameters in the first control data to establish or define a signature 212 for baseline operational behavior in the time domain. Additionally or alternatively, the edge device 160 may analyze one or more frequency domain parameters in the first control data to establish or define a signature 212 for baseline operational behavior in the frequency domain.

Second control data associated with each axis of the machine is collected at operation 1130. For example, the edge device 160 may communicate with the controller to collect frequency, voltage, and/or current data (e.g., motion control data 162) used to regulate or control the spinning axis 152 of the motor 130 (e.g., first axis) over a subsequent operating period (e.g., second time period).

The second control data is compared with the corresponding signature 212 at operation 1140 to identify a difference between the second control data and the signature 212 (e.g., delta 330, first delta 332, second delta 334, third delta 336, fourth delta 338). In some examples, the edge device 160 may determine whether the difference meets or exceeds one or more predetermined thresholds (e.g., upper plot line 626, lower plot line 628, upper plot line 636, lower plot line 638). For example, it may be determined whether differences in parameters such as operational state, start time, stop time, running time, power input, power output, power consumption, power loss, power quality, position, speed, acceleration, force, torque, frequency, voltage, current, operating temperature, and/or diagnostic codes meets or exceeds their respective thresholds in the time domain to identify potential friction-related anomalies and/or in the frequency domain to identify potential backlash-related anomalies. Alternatively, differences may be compared with their respective thresholds in any other domain to identify any other anomalies that enables the methods and systems described herein to function and/or operate as described herein.

On condition that a difference exceeds a predetermined threshold, one or more actions are performed at operation 1150 to address the difference between the second control data and the corresponding signature 212. For example, the edge device 160 may automatically generate an alert that prompts a user to take action. The alert may include detailed information about the detected issue and recommend or suggest one or more corrective measures. Additionally or alternatively, the edge device 160 may generate control data configured to adjust one or more system parameters to mitigate an impact of the detected issue. For example, the edge device 160 may propose the system parameter adjustments to the user with a confirmation dialog and await user approval before implementing the changes. Alternatively, the edge device 160 may automatically use the control data to adjust the system parameters without user intervention. In some examples, the edge device 160 may present a notice informing the user of the automatic actions with status bar information, allowing the user to monitor progress of the automatic actions, and/or an option to intervene, override, or adjust the automatic actions, if desired. In some examples, the edge device 160 may act according to a significance, priority, and/or severity of the detected issue. For example, if the edge device 160 determines that the detected issue is associated with a lower significance, priority, or severity, then the edge device 160 may decide to automatically present an informational notification to the user. For another example, if the edge device 160 determines that the detected issue is associated with a moderate significance, priority, or severity, then the edge device 160 may decide to automatically present a warning with recommended actions and/or a confirmation dialog to the user. For yet another example, if the edge device 160 determines that the detected issue is associated with a higher significance, priority, or severity, then the edge device 160 may decide to automatically perform one or more actions without user intervention.

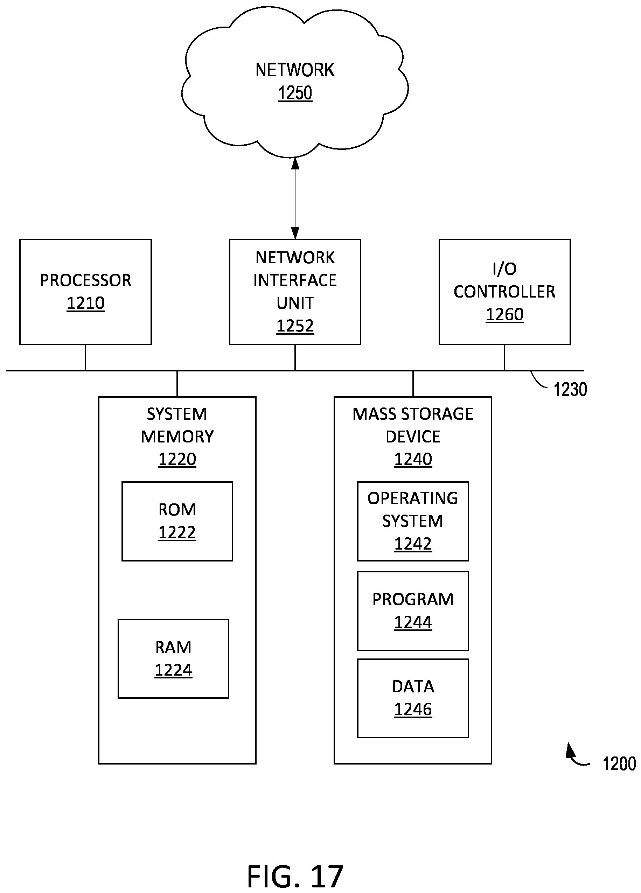

FIG. 17 shows an example computing system 1200 (e.g., controller, edge device 160) configured to perform one or more computing operations described herein. In some examples, the computing system 1200 includes a processor 1210, a system memory 1220, and a bus 1230 coupling various system components including the system memory 1220 to the processor 1210.

The processor 1210 is configured to perform general computing functions and process data and instructions to perform one or more operations and/or provide other functionality described herein. For example, the processor 1210 may access the system memory 1220 to read data and instructions from and/or write data and instructions to the system memory 1220 for use in executing one or more computer-executable instructions. In this manner, the processor 1210 may be programmed to execute any aspect of the software components described herein, including software components for executing, implementing, and/or employing the motor 130 (shown in FIG. 1), system dashboard 700 (shown in FIG. 10), axis interface (shown in FIG. 11), trace interface 900 (shown in FIG. 12), notification interface 1000 (shown in FIG. 15), method 1100 (shown in FIG. 16). In some examples, the processor 1210 may be or include any quantity of processing units including a central processing unit, a graphics processing unit, a field-programmable gate array (FPGA), a digital signal processor (DSP), or other hardware logic components including, without limitation, an Application-Specific Integrated Circuit (ASIC), Application-Specific Standard Product (ASSP), System-on-a-Chip System (SOC), Complex Programmable Logic Device (CPLD), etc.

The system memory 1220 includes any combination of computer-readable media that may be accessed by the processor 1210. In some examples, the system memory 1220 includes a read-only memory (ROM) 1222 which stores instructions for executing basic functions and a random access memory (RAM) 1224 which temporarily stores data and instructions for actively used programs. For example, the RAM 1224 may be used to host or store user data, device data, system data, and the like, as well as one or more software components for executing, implementing, and/or employing the motor 130 (shown in FIG. 1), system dashboard 700 (shown in FIG. 10), axis interface (shown in FIG. 11), trace interface 900 (shown in FIG. 12), notification interface 1000 (shown in FIG. 15), method 1100 (shown in FIG. 16).

Computer-readable media includes both communication media and computer storage media. Communication media typically embody computer-readable instructions, data structures, program modules, or other data in a modulated data signal, such as a carrier wave or other transport mechanism. The term "modulated data signal" means a signal that has one or more of its characteristics set or changed in a manner as to encode information in the signal. By way of example, and not limitation, communication media includes wired media, such as a wired network or direct-wired connection, and wireless media, such as acoustic, radio frequency, and infrared media.

In contrast, computer storage media include tangible forms of media that can store information such as computer-readable instructions, data structures, program modules, or other data. By way of example, and not limitation, computer storage media includes ROM 1222, RAM 1224, hard disk drives (HDDs), solid-state drives (SSDs), external hard drives, flash drives, optical storage media (e.g., compact discs (CDs), digital versatile discs (DVDs), and magnetic storage media (e.g., tape drives). For purposes of the present disclosure, computer storage media is mutually exclusive to communication media and excludes waves, signals, and other transitory or intangible forms of media.

It should be appreciated that the software components described herein, when loaded into the processor 1210 and executed, may transform the processor 1210 and the overall computing system 1200 from a general-purpose computing system into a special-purpose computing system customized to facilitate the functionality described herein. More specifically, the computer-executable instructions contained within the software components described herein transform the processor 1210 to operate or function as a finite-state machine by specifying how the processor 1210 transitions between states, thereby transforming the transistors or other discrete circuit elements constituting the processor 1210.

Encoding the software components described herein may also transform the physical structure of the computer-readable media described herein. The specific transformation of physical structure may depend on various factors, in different implementations of the present disclosure. Examples of such factors may include, but are not limited to, the technology used to implement the computer-readable media, whether the computer-readable media is characterized as primary or secondary storage, and the like. For example, if the computer-readable media is implemented as semiconductor-based memory, the software disclosed herein may be encoded on the computer-readable media by transforming the physical state of the transistors, capacitors, or other discrete circuit elements constituting the semiconductor-based memory. The software also may transform the physical state of such components in order to store data thereupon.

As another example, the computer-readable media disclosed herein may be implemented using magnetic or optical technology. In such implementations, the software presented herein may transform the physical state of magnetic or optical media, when the software is encoded therein. These transformations may include altering the magnetic characteristics of particular locations within given magnetic media. These transformations also may include altering the physical features or characteristics of particular locations within given optical media, to change the optical characteristics of those locations. Other transformations of physical media are possible without departing from the scope and spirit of the present description, with the foregoing examples provided only to facilitate this discussion.

In some examples, the computing system 1200 includes a mass storage device 1240 coupled to the processor 1210 for hosting or storing data and instructions, such as an operating system 1242, one or more programs 1244, and/or data 1246. One of ordinary skill in the art would understand that copies of at least some data and/or instructions hosted or stored in the mass storage device 1240 may be at least temporarily stored in the system memory 1220 to enable the computing system 1200 to function as described herein.

As shown in FIG. 17, the computing system 1200 may connect to a network 1250 (e.g., network 170) through a network interface unit 1252 connected to the bus 1230. In this manner, the computing system 1200 may operate in a networked environment in which the computing system 1200 may use one or more remote devices (not shown) to host or store at least some data and/or to execute at least some instructions. Computer communication between computing systems can be a network transfer, a file transfer, an applet transfer, an email, a hypertext transfer protocol (HTTP) transfer, and so on.

In some examples, the computing system 1200 may include one or more input/output (I/O) controllers 1260 that facilitate communication and data transfer between the processor 1210 and one or more I/O devices (not shown) configured to provide input and/or output capabilities. For example, a user may enter commands and information into the computing system 1200 using one or more input devices, such as a keyboard, pointing device (e.g., mouse, trackball, touch pad, stylus), microphone, camera, scanner, accelerometer, and the like. Additionally or alternatively, the computing system 1200 may present various forms of information, such as text, images, audio, video, alerts, and the like, using one or more output devices, such as a monitor, projector, printer, speaker, actuator, and the like. In some examples, the output device may be integrated with the input device (e.g., in a touchscreen panel or in a controller including a vibrating component).

While some examples are illustrated and described herein with reference to the computing system 1200 being, including, or being included in the edge device 160 (shown in FIG. 1), aspects of the present disclosure are operable with any computing system that can execute computer-executable instructions to implement the operations and functionality associated with the computing system 1200. It is also contemplated that the computing system 1200 may not include all of the components shown in FIG. 17, may include other components that are not explicitly shown in FIG. 17, or may utilize an architecture completely different than that shown in FIG. 17. The computing system 1200 should not be interpreted as having any dependency or requirement relating to any one or combination of components shown in FIG. 17. The computing system 1200 is only one example of a computing and networking environment for performing one or more computing operations and is not intended to suggest any limitation as to the scope of use or functionality of the present disclosure.

Example methods and systems are described herein for conducting health assessments and/or predicting maintenance or replacement of machines with motion axes without relying on additional sensors. For example, changes in one or more control parameters may help diagnose or identify shifts in one or more physical properties and/or environmental conditions that may indicate or reveal issues such as increased friction, misalignment, backlash, mechanical deterioration, or changes in load. Examples described herein monitor control data over time and use the control data to conduct health assessments and/or predictive maintenance. Accordingly, examples described herein provide an accurate, user-friendly solution for effective detection and prediction of mechanical failures in machines with motor axes (e.g., machines with servo drives). In view of the above, it will be seen that several advantages of the aspects of the present disclosure are achieved and other advantageous results attained.

Although described in connection with an example computing system environment, examples of the present disclosure are capable of implementation with numerous other general purpose or special purpose computing system environments, configurations, or devices. Examples of well-known computing systems, environments, and/or configurations that may be suitable for use with aspects of the disclosure include, but are not limited to, server computers, desktop computers, laptop computers, tablets, mobile devices, communication devices in wearable or accessory form factors, microprocessor-based systems, multiprocessor systems, programmable consumer electronics, kiosks, tabletop devices, industrial control devices, minicomputers, mainframe computers, network computers, distributed computing environments that include any of the above systems or devices, and the like.

Examples of the present disclosure may be described in the general context of computer-executable instructions, such as program modules, executed by one or more computers or other devices in software, firmware, hardware, or a combination thereof. The computer-executable instructions may be organized into one or more computer-executable modules or components. Generally, program modules include, but are not limited to, routines, objects, components, and data structures that perform particular tasks or implement particular abstract data types. Aspects of the disclosure may be implemented with any number and organization of such modules or components. For example, aspects of the present disclosure are not limited to the specific computer-executable instructions or the specific components or modules illustrated in the figures and described herein. Other examples of the present disclosure may include different computer-executable instructions or components having more or less functionality than illustrated and described herein.

In some examples, the operations illustrated in the drawings may be implemented as software instructions encoded on a computer readable medium, in hardware programmed or designed to perform the operations, or both. For example, aspects of the present disclosure may be implemented as a system on a chip or other circuitry including a plurality of interconnected, electrically conductive elements.

It is possible for one or more elements of an implementation of an apparatus as described herein to be used to perform tasks or execute other sets of instructions that are not directly related to an operation of the apparatus, such as a task relating to another operation of a device or system in which the apparatus is embedded. It is also possible for one or more elements of an implementation of such an apparatus to have structure in common (e.g., a processor used to execute portions of code corresponding to different elements at different times, a set of instructions executed to perform tasks corresponding to different elements at different times, or an arrangement of electronic and/or optical devices performing operations for different elements at different times).

The order of execution or performance of the operations in examples of the present disclosure illustrated and described herein is not essential, unless otherwise specified. That is, the operations may be performed in any order, unless otherwise specified, and examples of the disclosure may include additional or fewer operations than those disclosed herein. For example, it is contemplated that executing or performing a particular operation before, contemporaneously with, or after another operation is within the scope of aspects of the present disclosure.

The examples illustrated and described herein as well as examples not specifically described herein but within the scope of aspects of the present disclosure constitute example means for conducting health assessments and/or predicting maintenance or replacement of machines with motion axes. For example, the elements illustrated in FIGS. 1 and 17, when programmed, encoded, or configured to perform the operations illustrated in FIG. 16, constitute at least an example means for collecting first control data associated with a first axis of the one or more motion axes, analyzing the first control data to determine a signature for the first axis, collecting second control data associated with the first axis, comparing the second control data with the signature to identify a difference between the second control data and the signature; determining whether the difference exceeds a predetermined threshold, and/or performing one or more actions to address the difference between the second control data and the signature (e.g., edge device 160).

When introducing elements of aspects of the disclosure or the examples thereof, the articles "a," "an," "the," and "said" are intended to mean that there are one or more of the elements. Furthermore, references to an "embodiment" or "example" of the present disclosure are not intended to be interpreted as excluding the existence of additional embodiments or examples that also incorporate the recited features. The terms "comprising," "including," and "having" are intended to be inclusive and mean that there may be additional elements other than the listed elements. The phrase "one or more of the following: A, B, and C" means "at least one of A and/or at least one of B and/or at least one of C."

The term "determining" encompasses a wide variety of actions and, therefore, "determining" can include calculating, computing, processing, deriving, investigating, looking up (e.g., looking up in a table, a database or another data structure), ascertaining and the like. Also, "determining" can include receiving (e.g., receiving information), accessing (e.g., accessing data in a memory) and the like. Also, "determining" can include resolving, selecting, choosing, establishing and the like.

In the present description, reference numbers have sometimes been used in connection with various terms. Where a term is used in connection with a reference number, this may be meant to refer to a specific element that is shown in one or more of the figures. Where a term is used without a reference number, this may be meant to refer generally to the term without limitation to any particular figure.

Having described aspects of the disclosure in detail, it will be apparent that modifications and variations are possible without departing from the scope of aspects of the disclosure as defined in the appended claims. As various changes could be made in the above constructions, products, and methods without departing from the scope of aspects of the disclosure, it is intended that all matter contained in the above description and shown in the accompanying drawings shall be interpreted as illustrative and not in a limiting sense.

While the aspects of the present disclosure have been described in terms of various examples with their associated operations, a person skilled in the art would appreciate that a combination of operations from any number of different examples is also within the scope of the aspects of the present disclosure.

## Claims

1. A method for assessing a condition of a machine with one or more motion axes, the method comprising:
collecting first control data;
analyzing the first control data to determine a signature;
collecting second control data;
comparing the second control data with the signature to identify a difference between the second control data and the signature; and
on condition that the difference exceeds a predetermined threshold, performing one or more actions to address the difference between the second control data and the signature.

2. The method of claim 1, wherein the first control data is collected over an initial learning period, and the second control data is collected over a subsequent operating period.

3. The method of claim 1 or 2, wherein the first control data and the second control data each include frequency, voltage, and current.

4. The method of any one of the preceding claims, wherein analyzing the first control data comprises analyzing one or more time domain parameters in the first control data.

5. The method of any one of the preceding claims, wherein analyzing the first control data comprises analyzing one or more frequency domain parameters in the first control data.

6. The method of any one of the preceding claims, wherein comparing the second control data with the signature comprises analyzing one or more time domain parameters in the second control data to determine whether the second control data is indicative of one or more friction-related anomalies.

7. The method of any one of the preceding claims, wherein comparing the second control data with the signature comprises analyzing one or more frequency domain parameters in the second control data to determine whether the second control data is indicative of one or more backlash-related anomalies.

8. The method of any one of the preceding claims, wherein performing one or more actions comprises automatically performing the one or more actions.

9. A system for conducting one or more health assessments, the system comprising:
a machine with one or more motion axes; and
a computing device configured to collect first control data, analyze the first control data to determine a signature, collect second control data, compare the second control data with the signature to identify a difference between the second control data and the signature, and on condition that the difference exceeds a predetermined threshold, perform one or more actions to address the difference between the second control data and the signature.

10. The system of claim 9, wherein the computing device collects the first control data over an initial learning period and collects the second control data over a subsequent operating period, and/or
wherein the first control data and the second control data each include frequency, voltage, and current, and/or
wherein the computing device analyzes one or more time domain parameters in the first control data, and/or
wherein the computing device analyzes one or more frequency domain parameters in the first control data, and/or
wherein the computing device analyzes one or more time domain parameters in the second control data to determine whether the second control data is indicative of one or more friction-related anomalies, and/or
wherein the computing device analyzes one or more frequency domain parameters in the second control data to determine whether the second control data is indicative of one or more backlash-related anomalies.

11. A computing device for assessing a condition of a machine with one or more motion axes, the computing device comprising:
a processor; and
a computer-readable memory comprising one or more instructions for causing the processor to:
collect first control data,
analyze the first control data to determine a signature,
collect second control data,
compare the second control data with the signature to identify a difference between the second control data and the signature, and
on condition that the difference exceeds a predetermined threshold, perform one or more actions to address the difference between the second control data and the signature.

12. The computing device of claim 11, wherein the processor is further configured to analyze one or more time domain parameters in the first control data, and analyzing one or more time domain parameters in the second control data to determine whether the second control data is indicative of one or more friction-related anomalies.

13. The computing device of claim 11 or 12, wherein the processor is further configured to analyze one or more frequency domain parameters in the first control data, and analyzing one or more frequency domain parameters in the second control data to determine whether the second control data is indicative of one or more backlash-related anomalies.

14. The computing device of claim 11, 12 or 13, wherein the processor is further configured to automatically perform the one or more actions.
